# FASCICULE DE BREVET EUROPEEN

(11) **EP 0 908 468 B1**
(45) Date de publication et mention de la délivrance du brevet: **26.05.2004**
(21) Numéro de dépôt: 98124378.5
(22) Date de dépôt: 08.12.1993
(51) Int. Cl.: C08F 4/646, C08F 10/00

(54) **Procédé de (co)polymérisation d'oléfines**
Verfahren zur (Co)Polymerisation von Olefinen
Process for the (co)polymerisation of olefins

(30) Priorité: 17.12.1992 BE 9201105
(43) Date de publication de la demande: 14.04.1999
(62) Demande divisionnaire de: 93203437.4
(73) Titulaire: SOLVAY POLYOLEFINS EUROPE - BELGIUM (Société Anonyme), 1050 Bruxelles (BE)
(72) Inventeur: Zandona, Nicola, 1410 Waterloo (BE)
(74) Mandataire: Smith, Julian Philip Howard

(56) Documents cités:
- EP-A- 0 436 399
- EP-A- 0 439 964

## Description

La présente invention concerne un procédé de (co)polymérisation d'oléfines, utilisant un système catalytique à base d'un métallocène ionique dérivé d'un métal de transition et d'un dérivé d'aluminium.

La demande de brevet EP-500944 (MITSUI TOATSU CHEMICALS) divulgue un procédé de polymérisation d'alpha-oléfines dans lequel on met en oeuvre un système catalytique obtenu en faisant réagir un composé organoaluminique avec un métallocène neutre halogéné dérivé d'un métal de transition et on mélange le produit ainsi obtenu avec un agent ionisant tel que le tétrakis(pentafluorophényl)borate de triphénylcarbénium.

Ce procédé connu présente l'inconvénient, lorsque de l'éthylène est polymérisé, de provoquer des croûtages dans les installations de polymérisation. Par ailleurs, il ne permet pas l'obtention de polymères ayant une large , distribution des poids moléculaires et un poids spécifique apparent élevé.

L'invention remédie aux inconvénients précités en fournissant un procédé de polymérisation d'oléfines utilisant un système catalytique de constitution nouvelle qui réduit les risques de croûtage lors de son utilisation et qui permet par ailleurs d'obtenir des polymères caractérisés par un poids spécifique apparent plus élevé et de régler d'une manière précise la distribution des poids moléculaires des (co)polymères obtenus.

A cet effet, l'invention concerne un procédé de (co)polymérisation d'au moins une oléfine en présence d'un système catalytique comprenant au moins un dérivé d'aluminium de formule générale AlXₙT₃₋ₙ, dans laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition, selon lequel on prépare un mélange du métallocène neutre avec un solide catalytique contenant au moins un élément du groupe IVB du tableau périodique, du magnésium et un halogène, on met le mélange ainsi obtenu en contact avec au moins un diluant hydrocarboné, le dérivé d'aluminium et l'oléfine, et on y ajoute l'agent ionisant.

Dans le procédé selon l'invention, le dérivé d'aluminium de formule générale AlXₙT₃₋ₙ peut par exemple être choisi parmi les trialkylaluminium et les composés haloalkylaluminiques. Des dérivés d'aluminium préférés sont ceux dont le groupe T est un radical hydrocarboné choisi parmi les groupes alkyle, alkényle, aryle et alkoxy éventuellement substitués, contenant jusqu'à 20 atomes de carbone, tels que le tributyl-, le triméthyl-, le triéthyl-, le tripropyl-, le triisopropyl-, le triisobutyl-, le trihexyl-, le trioctyl- et le tridodécylaluminium et le chlorure de diéthylaluminium. Les dérivés d'aluminium les plus avantageux sont le triéthylaluminium et le triisobutylaluminium.

Selon l'invention les métallocènes neutres répondent à la formule (Cₚ)ₐ(Cₚ')_{b}MXₓZ_{z}, dans laquelle :
- Cₚ et Cp' désignent chacun un radical hydrocarboné insaturé coordiné à un atome central, les groupes Cₚ et Cₚ' pouvant être liés par un pont covalent
- M désigne le métal de transition choisi parmi les groupes IIIB, IVB, VB et VIB du tableau périodique
- a, b, x et z désignent des nombres entiers tels que (a + b + x + z) = m, x ≥ 0, z ≥ 0 et a et/ou b ≠ 0
- m désigne la valence du métal de transition M
- X désigne un halogène, et
- Z désigne un radical hydrocarboné pouvant éventuellement comprendre de l'oxygène ou un radical silyl de formule (-Rₜ₋Si-R'R''R''') où
- R désigne un groupe alkyle, alkényle, aryle, alkoxy ou cycloalkyle éventuellement substitué, comprenant jusqu'à 20 atomes de carbone
- R', R'' et R''' sont identiques ou différents et désignent chacun un halogène ou un groupe alkyle, alkényle, aryle, alkoxy ou cycloalkyle éventuellement substitué, comprenant jusqu'à 20 atomes de carbone
- t désigne 0 ou 1.

Le métal de transition du métallocène peut être avantageusement un élément sélectionné parmi le scandium, le titane, le zirconium, l'hafnium et le vanadium. Le zirconium est préféré.

Les groupes Cp et Cp' représentent chacun avantageusement un groupe mono- ou polycyclique comprenant de 5 à 50 atomes de carbone liés par des doubles liaisons conjuguées. Comme exemples typiques, on peut citer le radical cyclopentadiényle, indényle ou fluorényle ou un dérivé substitué de ce radical dans lequel au moins un atome d'hydrogène est substitué par un radical hydrocarboné comprenant jusqu'à 10 atomes de carbone. Il peut également s'agir d'un radical dérivé d'un élément choisi parmi le groupe VA du tableau périodique, par exemple l'azote ou le phosphore.

On peut citer comme exemples de métallocènes neutres de formule (Cₚ)ₐ(Cₚ')_{b}MXₓZ_{z}, les métallocènes de scandium non halogénés, mono- et dihalogénés tels que le méthyldi(cyclopentadiényl)scandium, le chloro(cyclopentadiényl)éthylscandium, le chlorodi(cyclopentadiényl)scandium et le dichloro(indényl)scandium, les métallocènes de titane non halogénés, mono-, di- et trihalogénés tels que le diéthyldi(fluorényl)titane, le dibromo(méthylcyclopentadiényl)butyltitane, le chloro(indényl)diisopropyltitane, le chlorométhyldi(pentaméthylcyclopentadiényl)titane, le dibromodi(méthylcyclopentadiényl)titane et le trichloro(cyclopentadiényl)titane, les métallocènes de zirconium non halogénés, mono-, di- et trihalogénés tels que le diméthyl(fluorénylindényl)zirconium, le dichloro(fluorényl)hexylzirconium, le iodotri(cyclopentadiényl)zirconium, le dibromo(cyclopentadiényl-1-indényl)zirconium, le trichloro(fluorényl)zirconium, les métallocènes d'hafnium non halogénés, mono-, di- et trihalogénés, les métallocènes de vanadium non halogénés, mono-, di- et trihalogénés tels que le chlorotri(cyclopentadiényl)vanadium, le dichlorodi(éthylcyclopentadiényl)-vanadium et le trichloro(éthylindényl)vanadium, les métallocènes de chrome trivalents non halogénés, mono- et dihalogériés tels que le dichloro(cyclopentadiényl)chrome.

Dans le cas où Z est un radical silyl de formule (-Rₜ₋Si-R'R''R'''), les métallocènes neutres de formule (Cₚ)ₐ(Cₚ')_{b}MXₓZ_{z} peuvent par exemple être choisis parmi ceux comprenant comme radical silyl, l'allyldiméthylchlorosilyl, l'allylméthyldiéthoxysilyl, le 5-(dicycloheptényl)trichlorosilyl, le 2-bromo-3-triméthylsilyl-1-propényl, le 3-chloropropyldiméthylvinylsilyl, le 2-(3-cyclohexényl)éthyltriméthoxysilyl et le diphénylvinylchlorosilyl.

Les métallocènes ayant un pont covalent connectant les deux groupes Cₚ et Cₚ' peuvent être choisis parmi ceux de formule générale : 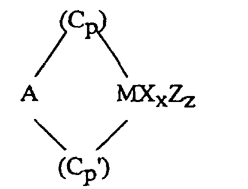 dans laquelle A représente un groupe alkylène pouvant éventuellement comprendre de l'oxygène, alkénylène, arylalkylène, alkylarylène, arylalkénylène, éventuellement halogéné ou un radical dérivé d'un élément choisi parmi les groupes IIIA, IVA, VA et VIA du tableau périodique, tel que le bore, l'aluminium, le silicium, le germanium, l'étain, l'azote, le phosphore ou le soufre. On peut citer comme exemple de métallocènes pontés, ceux répondant aux formules : 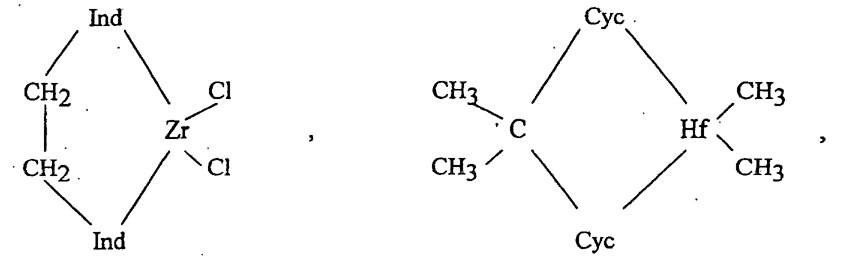 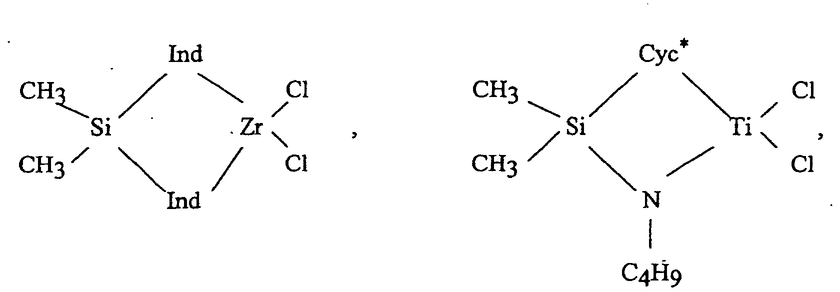 dans lesquelles Ind représente le radical indényle, Cyc représente le radical cyclopentadiényle et Cyc* représente le radical pentaméthylcyclopentadiényle.

Les métallocènes de formule (Cₚ)ₐ(Cₚ')_{b}MXₓZ_{z} préférés sont ceux dans lesquels les groupes Cₚ et Cₚ' sont choisis parmi les radicaux cyclopentadiényle, indényle et fluorényle. De bons résultats sont obtenus avec ceux dont les groupes Cp et Cp' sont liés par un pont covalent du type alkyle. Les métallocènes dont le métal de transition est choisi parmi le titane, le zirconium et l'hafnium conviennent très bien. On obtient des résultats particulièrement satisfaisants avec les métallocènes dérivés du zirconium.

Le solide catalytique est un catalyseur de la polymérisation d'oléfines, obtenu en mélangeant un composé de magnésium avec un composé d'un élément du groupe IVB du tableau périodique et un composé halogéné. Le composé halogéné peut éventuellement faire partie intégrante du composé de magnésium ou du composé de l'élément du groupe IVB.

Comme composés de magnésium utilisables pour la préparation du solide catalytique, on peut citer, à titre d'exemples non limitatifs, les halogénures, l'hydroxyde, l'oxyde, les hydroxyhalogénures, les alcoolates, les haloalcoolates, les arylalcoolates, les haloarylalcoolates, les alkylhalogénures de magnésium et leurs mélanges.

Des composés de l'élément du groupe IVB du tableau périodique utilisables pour la synthèse du solide catalytique sont les tétrahalogénures, les alcoolates, les alcoolates halogénés, les trihalogénures obtenus par réduction de tétrahalogénures au moyen d'un composé organoaluminique, ou leurs mélanges. On peut citer comme exemple le TiCl₄, le Zr(OC₂H₅)Cl₃, le Hf(O-C₄H₉)₂Cl₂ et le Ti(OC₂H₅)₃Br.

Dans le cas où le composé halogéné ne fait pas partie intégrante du composé de magnésium ou du composé de l'élément du groupe IVB, il peut par exemple être choisi parmi les dérivés halogénés d'aluminium de formule AlT_{y}X_{3-y} dans laquelle T représente un radical hydrocarboné pouvant éventuellement comprendre de l'oxygène, y désigne un nombre entier de 0 à 2 et X représente un halogène. On peut citer comme exemples typiques le dichlorure d'éthylaluminium, le chlorure de dipropylaluminium et le trichlorure d'aluminium. Le composé halogéné peut également être sélectionné parmi les dérivés halogénés de silicium tels que par exemple SiCl₄, (C₂H₅O)₂SiCl₂ ou (CH₃)₃SiCl.

La fabrication du solide catalytique peut également impliquer l'emploi d'un donneur d'électrons tel que les acides carboxyliques, les esters, les éthers et les alcools. Ce donneur d'électrons est généralement choisi parmi ceux comprenant jusqu'à 12 atomes de carbone. Il est avantageusement utilisé pour prétraiter le composé de magnésium.

Un exemple typique de synthèse du solide catalytique consiste à mélanger un halogénure de l'élément du groupe IVB du tableau périodique avec un composé oxygéné de magnésium tel que décrit dans les brevets BE-705220 (SOLVAY & CIE) et BE-730068 (SOLVAY & CIE). Selon un autre exemple, on précipite un mélange d'un composé oxygéné de l'élément du groupe IVB et d'un composé oxygéné du magnésium au moyen d'un composé halogéné, tel que décrit dans le brevet BE-791676 (SOLVAY).

Les solides catalytiques préférés sont ceux dont l'élément du groupe IVB est le titane et dont l'halogène est le chlore. Les meilleurs résultats sont obtenus avec les solides catalytiques présentant une teneur en élément du groupe IVB de 10 à 30 % en poids, de préférence de 15 à 20 %, typiquement d'environ 17 %, une teneur en halogène de 20 à 50 % en poids, les valeurs de 30 à 40 % (en particulier d'environ 36 %) étant préférées et une teneur en magnésium de 0,5 à 20 % en poids, habituellement de 1 à 10 %, par exemple environ 5 %.

Des systèmes catalytiques utilisables selon l'invention ayant conduit à de bons résultats sont ceux qui présentent un rapport pondéral du métal de transition à l'élément du groupe IVB du solide catalytique au minimum égal à 0,05, de préférence à 0,1, par exemple à 0,5; il est habituellement au maximum égal à 10, en particulier à 5, par exemple à 2.

Selon une variante avantageuse, le système catalytique comprend un support minéral. Le support minéral peut être sélectionné parmi les oxydes minéraux tels que les oxydes de silicium, d'aluminium, de titane, de zirconium, de thorium, leurs mélanges et les oxydes mixtes de ces métaux tels que le silicate d'aluminium et le phosphate d'aluminium, et parmi les halogénures minéraux tels que le chlorure de magnésium. La silice, l'alumine, le chlorure de magnésium et les mélanges de silice et de chlorure de magnésium sont préférés.

Dans le procédé selon l'invention, on entend désigner par agent ionisant un composé comprenant une première partie qui présente les propriétés d'un acide de Lewis et qui est capable d'ioniser le métallocène neutre et une deuxième partie qui est inerte vis-à-vis du métallocène ionisé et qui est capable de stabiliser le métallocène ionisé. L'agent ionisant peut être un composé ionique comprenant un cation présentant les propriétés d'un acide de Lewis et un anion constituant la deuxième partie précitée de l'agent ionisant. Les anions ayant conduit à de très bons résultats sont les organoborates. On entend désigner par organoborate un dérivé du bore dans lequel l'atome de bore est lié à 4 substituants organiques. On peut citer comme exemples d'agents ionisants ioniques le tétrakis(pentafluorophényl)borate de triphénylcarbénium, le tétrakis(pentafluorophényl)borate de N,N-diméthylanilinium et le tétrakis(pentafluorophényl)borate de tri(n-butyl)ammonium. Les acides de Lewis cationiques préférés sont le carbénium, le sulfonium et l'oxonium.

En variante, l'agent ionisant peut également être un composé nonionique présentant les propriétés d'un acide de Lewis qui est capable de transformer le métallocène neutre en métallocène cationique. A cet effet, l'agent ionisant est lui-même transformé en un anion inerte vis-à-vis du métallocène cationique qui est capable de stabiliser celui-ci. On peut citer comme exemples d'agent ionisant nonionique, le tri(pentafluorophényl)bore, le triphénylbore, le triméthylbore, le tri(triméthylsilyl)borate et les organoboroxines. Les agents ionisants nonioniques sont mis en oeuvre en l'absence d'un acide de Brönsted.

L'agent ionisant est de préférence sélectionné parmi le tétrakis(pentafluorophényl)borate de triphénylcarbénium et le tri(pentafluorophényl)bore.

La première étape du procédé de préparation du système catalytique consiste à mélanger le métallocène neutre avec le solide catalytique. Ce mélange peut être effectué par voie sèche en mélangeant les constituants à l'état solide. Il peut également être réalisé par imprégnation du solide catalytique avec une solution du métallocène neutre dans un diluant hydrocarboné. La suspension ainsi obtenue peut être utilisée telle quelle à l'étape suivante. En variante, le solide catalytique imprégné du métallocène neutre peut être recueilli de la suspension et mis en oeuvre à l'étape suivante à l'état solide.

Cette première étape peut être effectuée à toute température inférieure à la température de décomposition du métallocène neutre et du solide catalytique. La température est habituellement comprise entre la température ambiante et 100 °C, de préférence de 50 à 85 °C.

Dans cette première étape, le métallocène neutre et le solide catalytique sont avantageusement mis en oeuvre en des quantités telles que le rapport pondéral du métallocène neutre au solide catalytique soit généralement au moins égal à 0,01, en particulier à 0,1; il est habituellement au maximum égal à 20, de préférence à 10, les valeurs de 0,3 à 5, typiquement environ 2, étant les plus avantageuses.

Le mélange préparé au cours de la première étape du procédé de préparation d'un système catalytique selon l'invention peut comprendre plus d'un métallocène neutre et plus d'un solide catalytique.

La deuxième étape du procédé de préparation du système catalytique consiste à mettre le mélange obtenu à la première étape en contact avec le dérivé d'aluminium dans au moins un diluant hydrocarboné et avec l'agent ionisant. Le dérivé d'aluminium a pour fonction de servir de cocatalyseur du système catalytique au cours de son utilisation pour la polymérisation d'oléfines. Dans le cas où le métallocène neutre mis en oeuvre à la première étape est halogéné, le dérivé d'aluminium comprend au moins un radical hydrocarboné. Dans ce cas, le dérivé d'aluminium a également pour fonction de substituer, à la deuxième étape du procédé selon l'invention, au moins un des halogènes du métallocène neutre par un radical hydrocarboné.

Dans ce cas, le dérivé d'aluminium est ajouté d'abord au mélange issu de la première étape, puis l'agent ionisant. Dans le cas où le métallocène neutre mis en oeuvre à la première étape est non halogéné, le dérivé d'aluminium est avantageusement ajouté au moment de l'utilisation du système catalytique dans le procédé de polymérisation d'oléfines.

Le diluant hydrocarboné utilisable dans cette deuxième étape peut être choisi parmi les hydrocarbures aliphatiques tels que les alcanes linéaires (par exemple le n-butane, le n-hexane et le n-heptane), les alcanes ramifiés (par exemple l'isobutane, l'isopentane, l'isooctane et le 2,2-diméthylpropane), les cycloalcanes (par exemple le cyclopentane et le cyclohexane), parmi les hydrocarbures aromatiques monocycliques tels que le benzène et ses dérivés, par exemple le toluène, et parmi les hydrocarbures aromatiques polycycliques, chaque cycle pouvant être substitué. On peut bien entendu utiliser simultanément plusieurs diluants hydrocarbonés. Le toluène convient bien.

La quantité du dérivé d'aluminium mise en oeuvre à la deuxième étape, par rapport à celle du métallocène neutre, dépend du choix de ces composés. En pratique, dans le cas où le métallocène neutre est halogéné, on a intérêt à utiliser le dérivé d'aluminium en une quantité suffisante pour substituer la totalité des atomes d'halogènes du métallocène neutre. D peut être avantageux d'utiliser des quantités supérieures du dérivé d'aluminium pour bénéficier de ses propriétés de capteur d'impuretés au cours de la fabrication du système catalytique. A cet effet, on recommande par exemple que le rapport molaire du dérivé d'aluminium au métallocène neutre soit au moins égal à 10. Afin de bénéficier également des propriétés précitées du dérivé d'aluminium au cours de l'utilisation du système catalytique dans le procédé de polymérisation d'oléfine selon l'invention, dans lequel le dérivé d'aluminium joue également le rôle de cocatalyseur du solide catalytique, on recommande que le rapport molaire du dérivé d'aluminium au métallocène neutre soit au moins égal à 100. En principe, il n'y a pas de limite supérieure au rapport molaire précité. En pratique toutefois, on n'a pas intérêt à ce que ce rapport excède 5000 pour des raisons économiques, les valeurs inférieures à 2000 étant recommandées. Des valeurs voisines de 500 à 1000 conviennent généralement bien.

Dans cette deuxième étape du procédé de préparation d'un système catalytique, l'agent ionisant est de préférence mis en oeuvre en une quantité suffisante pour ioniser la totalité du métallocène. La quantité d'agent ionisant à mettre en oeuvre va dès lors dépendre du métallocène neutre et de l'agent ionisant sélectionnés. En général, on peut utiliser une quantité d'agent ionisant telle que le rapport molaire de l'agent ionisant au métallocène neutre mis en oeuvre à la première étape précitée soit au moins égale à 0,1, en particulier au moins égale à 0,5, les valeurs ne dépassant pas 10 étant préférées, celles ne dépassant pas 2 étant recommandées.

Cette deuxième étape du procédé de préparation du système catalytique peut être effectuée à toute température qui est à la fois inférieure à la température d'ébullition du composé le plus volatile du milieu obtenu à la pression de travail et inférieure à la température de décomposition thermique des composants du milieu. Par milieu on entend désigner l'ensemble des composants mis en oeuvre à la deuxième étape (métallocène neutre, solide catalytique, dérivé d'aluminium, diluant hydrocarboné et agent ionisant) et recueillis à l'issue de celle-ci. La température dépend dès lors de la nature des composants du milieu et est généralement supérieure à -50 °C, de préférence au moins égale à 0 °C. Elle est habituellement au maximum égale à 100 °C, de préférence inférieure à 80 °C. La température ambiante convient particulièrement bien.

La durée de cette deuxième étape doit être suffisante pour obtenir une ionisation complète du métallocène ou du produit de sa réaction avec le dérivé d'aluminium. Elle peut varier de quelques secondes à plusieurs heures. Les réactions à la deuxième étape étant en général quasi-instantanées, les durées de 0,5 à 30 minutes sont les plus courantes. Le milieu peut être agité pendant toute la durée de la deuxième étape ou pendant une partie de celle-ci.

A la deuxième étape du procédé de préparation du système catalytique, on peut mettre en oeuvre plus d'un dérivé d'aluminium et plus d'un agent ionisant.

Dans une première forme d'exécution du procédé de préparation du système catalytique, la première étape est opérée par voie sèche en mélangeant le solide catalytique et le métallocène neutre à l'état solide et on met le mélange solide ainsi obtenu en oeuvre à la deuxième étape.

Dans une variante de cette première forme d'exécution, le métallocène neutre et le solide catalytique sont broyés ensemble à l'état solide pendant qu'on les mélange.

Dans une deuxième forme d'exécution du procédé de préparation du système catalytique, le solide catalytique est imprégné avec une solution du métallocène neutre. A cet effet, on le dissout au préalable dans un hydrocarbure aromatique, de préférence le toluène. Dans cette forme d'exécution le solide catalytique imprégné est recueilli de la suspension et mis en oeuvre à l'état solide dans l'étape suivante.

Dans une troisième forme d'exécution du procédé de préparation du système catalytique, on recueille un solide résultant de la mise en contact du dérivé d'aluminium avec le mélange issu de la première étape et on ajoute ensuite l'agent ionisant à ce solide.

Dans le procédé de préparation du système catalytique, l'agent ionisant peut être mis en oeuvre à l'état solide ou à l'état liquide, par exemple à l'état d'une solution.

Dans une quatrième forme d'exécution du procédé de préparation du système catalytique, où l'agent ionisant est mis en oeuvre sous forme d'une solution, la deuxième étape du procédé est précédée d'une dissolution de l'agent ionisant dans un diluant hydrocarboné. Le diluant hydrocarboné peut être sélectionné parmi les hydrocarbures aromatiques tels que le toluène et les hydrocarbures aliphatiques halogénés tels que le chlorure de méthylène et le chloroforme. Le toluène convient bien. Dans cette forme d'exécution, la quantité du diluant hydrocarboné mise en oeuvre doit être suffisante pour y permettre une dissolution complète de l'agent ionisant. La quantité du diluant hydrocarboné dépend dès lors de sa nature, de la nature de l'agent ionisant et de la température à laquelle la deuxième étape du procédé est effectuée.

Dans une cinquième forme d'exécution du procédé de préparation du système catalytique, le métallocène neutre est déposé sur un support minéral. Le support minéral peut être sélectionné parmi les oxydes minéraux tels que les oxydes de silicium, d'aluminium, de titane, de zirconium, de thorium, leurs mélanges et les oxydes mixtes de ces métaux tels que le silicate d'aluminium et le phosphate d'aluminium, et parmi les halogénures métalliques tels que le chlorure de magnésium. La silice, l'alumine, le chlorure de magnésium et les mélanges de silice et de chlorure de magnésium sont préférés.

Dans une première variante de cette cinquième forme d'exécution, on imprègne le support minéral, éventuellement activé au préalable par tout moyen connu, avec une solution du métallocène neutre. La solution peut être préparée comme dans la deuxième forme d'exécution du procédé, explicitée plus haut. La température opératoire de l'imprégnation peut varier de la température ambiante à la température d'ébullition de la solution du métallocène neutre et la durée de l'imprégnation peut varier de quelques minutes à plusieurs heures. Dans cette forme d'exécution, le support minéral imprégné du métallocène neutre est recueilli de la suspension, puis mélangé au solide catalytique au cours de la première étape explicitée plus haut.

Dans une deuxième variante de cette cinquième forme d'exécution, le support minéral et le métallocène neutre sont mélangés à l'état solide (éventuellement en les co-broyant). Le mélange solide ainsi obtenu est ensuite mis en oeuvre à la première étape explicitée plus haut.

Dans une sixième forme d'exécution du procédé de préparation du système catalytique, l'agent ionisant est déposé sur un support minéral. A cet effet, on imprègne le support minéral, éventuellement activé au préalable par tout moyen connu, avec une solution de l'agent ionisant. La solution peut être préparée comme dans la quatrième forme d'exécution du procédé selon l'invention explicitée plus haut. Le support minéral et les conditions opératoires de l'imprégnation sont conformes à ce qui a été décrit ci-dessus dans la cinquième forme d'exécution du procédé selon l'invention.

Dans une septième forme d'exécution du procédé de préparation du système catalytique qui est particulièrement performante, on mélange à l'état sec le solide catalytique avec un support minéral et on met le mélange ainsi obtenu en oeuvre à la première étape du procédé selon l'invention. Le support minéral est conforme à celui utilisé dans la cinquième forme d'exécution du procédé explicitée ci-dessus.

Dans une huitième forme d'exécution du procédé de préparation du système catalytique, on met en oeuvre un métallocène neutre de formule (Cₚ)ₐ(Cₚ')_{b}MXₓ(-Rₜ₋Si-R'R''R''')_{z}, que l'on a préparé en faisant réagir avec un silane un composé de formule (Cₚ)ₐ(Cₚ')_{b}MXₓH_{z} où les symboles Cp, Cp', M, X, H, a, b, x et z ont la même signification que celle donnée ci-avant, à l'exception de z qui est plus grand que zéro. On fait la réaction de préférence dans un solvant adéquat.

Des composés de formule (Cₚ)ₐ(Cₚ')_{b}MXₓH_{z}, ayant conduit à de très bons résultats, sont notamment ceux dérivés du zirconium, du titane et de l'hafnium, dont Cₚ et Cₚ' sont choisis parmi les radicaux cyclopentadiényle, indényle et fluorényle. On utilise de préférence ceux dérivés du zirconium. De préférence X représente le chlore. Comme exemples de silanes utilisables dans cette forme d'exécution, on peut citer l'allyldiméthylchlorosilane, l'allylméthyldiéthoxysilane, le 5-(dicycloheptényl)trichlorosilane, le 2-bromo-3-triméthylsilyl-1-propène, le 3-chloropropyldiméthylvinylsilane, le 2-(3-cyclohexényl)éthyltriméthoxysilane, le diphénylvinylchlorosilane, le vinyltriphénoxysilane, le vinyltrichlorosilane, le 2-(triméthylsilylméthyl)-1,3-butadiène et le 3-(triméthylsilyl)cyclopentène. Les silanes préférés sont les alkénylsilanes non chlorés tels que l'allyltriéthoxysilane, l'allyltriméthylsilane, le 5-(bicycloheptényl)triéthoxysilane, le vinyl(triméthoxy)silane et le 2-(3-cyclohexényl)éthyltriméthoxysilane. Le vinyl(triméthoxy)silane convient particulièrement bien. Le solvant de la réaction entre le silane et le composé de formule (Cₚ)ₐ(Cₚ')_{b}MXₓH_{z} est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Dans une neuvième forme d'exécution du procédé de préparation du système catalytique, on met en oeuvre un métallocène neutre de formule (Cₚ)ₐ(Cₚ')_{b}MXₓZ_{z}, où les symboles Cp, Cp', M, X, Z, a, b, x et z ont la même signification que celle donnée ci-avant, dans laquelle z est différent de 0 et Z est un radical hydrocarboné que l'on a préparé en faisant réagir un composé de formule (Cₚ)ₐ(Cₚ')_{b}MXₓH_{z} avec une oléfine. Cette réaction a lieu de préférence dans un solvant adéquat. Les composés de formule (Cₚ)ₐ(Cₚ')_{b}MXₓH_{z} sont conformes'à ceux définis ci-dessus dans la huitième forme d'exécution. Les oléfines utilisables dans cette forme d'exécution contiennent avantageusement jusqu'à 20 atomes de carbone, de préférence jusqu'à 12 atomes de carbone, et peuvent être choisies parmi les mono-oléfines telles que l'éthylène et le 3-éthyl-1-butène, les dioléfines non conjuguées telles que le 1,5-hexadiène, les dioléfines conjuguées telles que le 1,3-pentadiène et les dioléfines alicycliques telles que le dicyclopentadiényle. L'oléfine préférée est l'éthylène. Le solvant de la réaction entre l'oléfine et le composé de formule (Cₚ)ₐ(Cₚ')_{b}MXₓH_{z} est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Ces deux dernières formes d'exécution permettent de fabriquer des systèmes catalytiques au départ d'hydrures de métallocènes de formule (Cₚ)ₐ(Cₚ')_{b}MXₓH_{z} dans laquelle z est différent de 0, qui sont en général difficiles à manipuler à cause de leur caractère polymérique et de la difficulté de les solubiliser économiquement.

Le procédé de préparation du système catalytique permet d'obtenir des systèmes catalytiques mixtes à base d'un métallocène ionique et d'un solide catalytique contenant au moins un élément du groupe IVB du tableau périodique, du magnésium et un halogène.

Le système catalytique peut être utilisé dans le procédé selon l'invention, pour l'homopolymérisation et la copolymérisation d'oléfines contenant jusqu'à 20 atomes de carbone par molécule. Les oléfines contiennent avantageusement de 2 à 12 atomes de carbone par molécule et sont par exemple choisies parmi l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène, et les monomères vinyliques tels que le styrène. Les systèmes catalytiques trouvent une utilisation particulière dans la production d'homopolymères de l'éthylène et du propylène, ou de copolymères de l'éthylène et du propylène avec un ou plusieurs comonomères oléfiniquement insaturés. Les comonomères peuvent être de matières diverses. Ils peuvent être des mono-oléfines pouvant comprendre jusqu'à 8 atomes de carbone, par exemple le 1-butène, le 1-pentène, le 3-méthyl-1-butène, le 1-hexène, les 3- et 4-méthyl-1-pentènes et le 1-octène. Une ou plusieurs dioléfines comprenant de 4 à 18 atomes de carbone peuvent également être copolymérisées avec l'éthylène et le propylène. De préférence, les dioléfines sont choisies parmi les dioléfines aliphatiques non conjuguées telles que le 4-vinylcyclohexène et le 1,5-hexadiène, les dioléfines alicycliques ayant un pont endocyclique telles que le dicyclopentadiène, le méthylène- et l'éthylidène-norbornène, et les dioléfines aliphatiques conjuguées telles que le 1,3-butadiène, l'isoprène et le 1,3-pentadiène.

Le système catalytique apparaît particulièrement performant pour la fabrication d'homopolymères de l'éthylène ou du propylène, et de copolymères de l'éthylène ou du propylène contenant au moins 90 %, de préférence au moins 95 %, en poids d'éthylène ou de propylène. Les comonomères préférés de l'éthylène sont le propylène, le 1-butène, le 1-hexène, le 1-octène et le 1,5-hexadiène, et ceux du propylène sont l'éthylène, le 1,3-butadiène, le 1,5-hexadiène.

Dans le procédé de (co)polymérisation selon l'invention, le dérivé d'aluminium, le métallocène neutre, l'agent ionisant, le solide catalytique et le diluant hydrocarboné sont conformes à ceux utilisés dans le procédé de préparation du système catalytique explicité plus haut. On utilise de préférence l'isobutane ou l'hexane comme diluant hydrocarboné. L'isobutane convient particulièrement bien.

Dans le procédé de (co)polymérisation selon l'invention, l'oléfine est conforme à la définition fournie plus haut des oléfines polymérisables en présence des systèmes catalytiques.

Dans le procédé de (co)polymérisation selon l'invention, la préparation du mélange du métallocène neutre et du solide catalytique, et l'ajout de l'agent ionisant sont réalisés respectivement comme dans la première et la deuxième étape du procédé de préparation du système catalytique décrit plus haut, préférentiellement dans le réacteur de polymérisation.

Dans le procédé de (co)polymérisation selon l'invention, à partir du moment où on ajoute l'oléfine dans le réacteur de polymérisation, des chaînes polymériques se forment en présence du solide catalytique, activé par le dérivé d'aluminium jouant le rôle de cocatalyseur. Cette formation de chaînes polymériques se poursuit jusqu'à l'épuisement de l'activité du solide catalytique et/ou de l'alimentation de l'oléfine. Par ailleurs, dès qu'on ajoute l'agent ionisant dans le réacteur de polymérisation, un autre type de chaîne polymérique se forme catalysée par le métallocène ionique (activé par le dérivé d'aluminium et par l'agent ionisant). Ainsi, le produit polymérique final est constitué d'au moins deux types de chaînes polymériques dans des proportions que l'on peut faire varier selon les quantités du solide catalytique, du métallocène neutre et de l'agent ionisant mises en oeuvre et selon le moment d'introduction de l'agent ionisant.

Dans une première forme de réalisation du procédé de (co)polymérisation selon l'invention, on met d'abord le mélange du métallocène neutre et du solide catalytique en contact avec le dérivé d'aluminium dans le réacteur de polymérisation et ensuite on y introduit l'oléfine. A cet effet, la mise en contact avec le composé organoaluminique peut être réalisée comme dans la deuxième étape du procédé de préparation du système catalytique décrit plus haut.

Dans une deuxième forme de réalisation, le dérivé d'aluminium et l'oléfine sont mis en contact avec le mélange du métallocène neutre et du solide catalytique simultanément en les introduisant en même temps dans le réacteur de polymérisation, et ensuite l'agent ionisant y est ajouté.

Dans une variante de cette deuxième forme de réalisation, qui est particulièrement préférée, on prépare au préalable un mélange d'une solution du dérivé d'aluminium dans le diluant hydrocarboné et de l'oléfine, auquel on ajoute le mélange du métallocène neutre et du solide catalytique, et ensuite l'agent ionisant.

Dans une troisième forme de réalisation, l'agent ionisant est introduit dans le réacteur de polymérisation après que l'activité du solide catalytique soit réduite d'au moins 50 %, de préférence d'au moins 75 % de sa valeur initiale. Par activité du solide catalytique, on entend désigner la quantité de polymère obtenu, exprimée en grammes, en présence du solide catalytique par heure et par gramme de solide catalytique.

Dans une variante de cette troisième forme de réalisation du procédé de (co)polymérisation suivant l'invention, on met en oeuvre le métallocène neutre et le solide catalytique en des quantités telles que le rapport pondéral du métallocène neutre au solide catalytique soit de 1 à 20. Cette variante de l'invention s'avère particulièrement avantageuse lorsqu'on souhaite limiter les phénomènes de croûtage dans le réacteur de polymérisation et favoriser la formation de (co)polymères de poids spécifique apparent élevé. En effet, du fait de la faible quantité de solide catalytique relative à celle du métallocène, cette variante permet, après l'introduction de l'oléfine et avant l'ajout de l'agent ionisant, d'enrober les sites catalytiques du métallocène, qui ne seront activés que lorsqu'on y ajoute l'agent ionisant, conduisant ainsi aux avantages mentionnés ci-dessus.

Dans une quatrième forme de réalisation du procédé de (co)polymérisation suivant l'invention, on met en oeuvre le métallocène neutre et le solide catalytique en des quantités telles que le rapport molaire du métallocène neutre au solide catalytique soit de 0,01 à 1. Cette forme de réalisation apparaît particulièrement performante lorsqu'on souhaite obtenir des (co)polymères ayant une distribution des poids moléculaires large tout en limitant leur teneur en oligomères.

Dans une cinquième forme de réalisation du procédé de (co)polymérisation suivant l'invention, le métallocène neutre ou l'agent ionisant est déposé sur un support minéral. Le support minéral est conforme à celui utilisé dans la cinquième forme de réalisation du procédé de préparation du système catalytique.

Dans une première variante de cette cinquième forme de réalisation du procédé de (co)polymérisation selon l'invention, on imprègne le support minéral avec une solution du métallocène neutre (respectivement de l'agent ionisant) comme décrit dans la deuxième (respectivement la quatrième) forme d'exécution du procédé de préparation du système catalytique.

Dans une deuxième variante de cette cinquième forme de réalisation du procédé de (co)polymérisation selon l'invention, le support minéral et le métallocène neutre (respectivement l'agent ionisant) sont mélangés (éventuellement en les co-broyant) à l'état solide.

Dans une variante particulièrement avantageuse de cette cinquième forme d'exécution du procédé de (co)polymérisation suivant l'invention, le solide catalytique est mélangé avec un support minéral avant de mettre ce mélange en contact avec le métallocène neutre. Le support minéral est conforme à celui utilisé comme support pour le métallocène neutre décrit ci-avant.

Dans le procédé de (co)polymérisation suivant l'invention, la polymérisation peut être effectuée indifféremment en solution, en suspension ou en phase gazeuse et peut être réalisée en continu ou en discontinu, par exemple en effectuant la polymérisation dans un ou plusieurs réacteurs. On peut ainsi avantageusement travailler dans un seul réacteur. Une autre façon de faire consiste à travailler dans plusieurs réacteurs disposés en série, le solide catalytique étant activé dans le premier réacteur et le métallocène dans un réacteur suivant. Le procédé ainsi réalisé s'avère particulièrement performant pour la fabrication de (co)polymères ayant une distribution des poids moléculaires multimodale, en particulier bimodale. Dans la (co)polymérisation on peut éventuellement mettre en oeuvre un régulateur du poids moléculaire tel que l'hydrogène. Une variante du procédé de (co)polymérisation selon l'invention comprend une prépolymérisation en suspension dans un premier réacteur suivie d'une polymérisation en phase gazeuse dans un second réacteur.

Dans le cas d'une (co)polymérisation en suspension, celle-ci est effectuée dans un diluant hydrocarboné tel que ceux utilisables dans la préparation du mélange du métallocène neutre et du dérivé d'aluminium, et à une température telle qu'au moins 50 % (de préférence au moins 70 %) du (co)polymère formé y soit insoluble. La température est généralement au moins égale à 20 °C, de préférence au moins 50 °C; elle est habituellement au maximum égale à 200 °C, de préférence au maximum 100 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa.

Dans le cas d'une (co)polymérisation en solution, celle-ci peut être réalisée dans un diluant hydrocarboné tel que ceux cités ci-avant. La température opératoire dépend du diluant hydrocarboné utilisé et doit être supérieure à la température de dissolution du (co)polymère dans celui-ci, de sorte qu'au moins 50 % (de préférence au moins 70 %) du (co)polymère y soit dissous. Par ailleurs la température doit être suffisamment basse pour empêcher une dégradation thermique du (co)polymère et/ou du système catalytique. En général, la température optimale est de 100 à 200 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa. En variante, la (co)polymérisation est effectuée en utilisant l'oléfine elle-même comme diluant hydrocarboné. Dans cette variante on peut utiliser une oléfine liquide dans les conditions normales de pression et de température, ou opérer sous une pression suffisante pour qu'une oléfine normalement gazeuse soit liquéfiée.

Dans le cas où la (co)polymérisation est effectuée en phase gazeuse, on met un courant gazeux comprenant l'oléfine en contact avec le système catalytique dans un lit fluidisé. Dès lors le débit du courant gazeux doit être suffisant pour maintenir le (co)polymère en fluidisation et dépend de la vitesse de formation de celui-ci et de la vitesse à laquelle le système catalytique est consommé. La pression partielle de l'oléfine peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution qui doit être inerte vis-à-vis du (co)polymère.

Une forme de réalisation particulière du procédé de (co)polymérisation selon l'invention consiste à copolymériser au moins deux oléfines introduites simultanément ou en différé dans le réacteur de polymérisation, les deux oléfines étant de préférence introduites avant l'ajout de l'agent ionisant.

Le procédé de (co)polymérisation selon l'invention est particulièrement performant pour la fabrication d'homopolymères de l'éthylène ou du propylène et de (co)polymères de l'éthylène et/ou du propylène.

Le procédé de (co)polymérisation suivant l'invention réduit les risques de croûtage dans le réacteur de polymérisation et permet l'obtention de (co)polymères présentant au moins une des propriétés avantageuses suivantes :
- une teneur faible en impuretés métalliques provenant du système catalytique,
- une large distribution en poids moléculaire,
- un poids spécifique apparent élevé.
   Le procédé de (co)polymérisation selon l'invention permet, en particulier, de produire des (co)polymères présentant les propriétés suivantes :
- une distribution de poids moléculaire ayant un rapport M_{w}/Mₙ au moins égal à 10, en général au moins égal à 20, plus particulièrement au moins égal à 30, M_{w} et Mₙ désignant respectivement la masse moléculaire moyenne en poids et la masse moléculaire moyenne en nombre du (co)polymère produit,
- un poids spécifique apparent au moins égal à 100 g/dm³, typiquement au moins égal à 120.

Les exemples, dont la description suit, servent à illustrer l'invention. Les exemples 1 à 3 sont conformes à l'invention. Les exemples 4 et 5 sont des exemples comparatifs.

La signification des symboles utilisés dans ces exemples, les unités exprimant les grandeurs mentionnées et les méthodes de mesure de ces grandeurs sont explicitées ci-dessous.
- M_{w}/Mₙ = rapport entre la masse moléculaire moyenne en poids et la masse moléculaire moyenne en nombre mesuré par chromatographie d'exclusion stérique réalisée dans le 1,2,4-trichlorobenzène à 135 °C sur un chromatographe de la société WATERS type 150 C.
- PSA = poids spécifique apparent du (co)polymère exprimé en g/dm³ et mesuré par écoulement libre selon le mode opératoire suivant : dans un récipient cylindrique de 50 cm³ de capacité, on verse la poudre à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on multiplie le résultat obtenu (exprimé en g) par 20.

Dans les exemples 1 et 2 conformes à l'invention, on a fabriqué du polyéthylène par un procédé en suspension au moyen d'un système catalytique mixte non supporté, dans lequel le métallocène et le solide catalytique sont activés simultanément.

### Exemple 1 (conforme à l'invention) :

### (a) préparation du solide catalytique

On a fait réagir du diéthylate de magnésium avec du tétrabutylate de titane en des quantités telles que le rapport molaire de magnésium au titane soit égal à 2. Ensuite, on a chloré et précipité le produit de réaction ainsi obtenu en mettant celui-ci en contact avec une solution de dichlorure d'éthylaluminium. Le solide ainsi obtenu, recueilli de la suspension, comprenait (% en poids) :
.Ti : 17,0
Cl : 36,2
Al : 1,9
Mg : 4,5.

### (b) mélange du métallocène neutre et du solide catalytique

637 mg d'une poudre de bis(cyclopentadiényl)dichlorozirconium ont été mélangés sous agitation pendant 48 heures dans 20 ml d'hexane avec 1396 mg du solide catalytique obtenu en (a). Le solide recueilli comprenait (% en poids) :
Ti : 11,0
Zr : 9,5
Cl : 26,2
Al : 1,3
Mg : 2,9.

### (c) polymérisation de l'éthylène

On a introduit dans un réacteur de trois litres de capacité, muni d'un agitateur, 1 ml d'une solution de 40 g/l de triéthylaluminium et 1 l d'isobutane. Ensuite, on a alimenté le réacteur en éthylène à une pression partielle de 0,8 MPa et en hydrogène à une pression partielle de 0,04 MPa. La température a été amenée à 60 °C. Puis, on y a ajouté 0,0043 g du solide obtenu en (b) et 0,0022 mmol de tétrakis(pentafluorophényl)borate de triphénylcarbénium sous forme de solution dans le toluène. La pression d'éthylène et la température ont été maintenues constantes pendant la durée de polymérisation. Après 90 minutes, le réacteur a été refroidi et dégazé. 55 g de polyéthylène ont été recueillis. Le polymère obtenu présentait les caractéristiques suivantes :
M_{w}/Mₙ = 31
PSA = 193.

### Exemple 2 (conforme à l'invention) :

### (a) préparation du solide catalytique

On a utilisé le même solide catalytique que celui obtenu à l'exemple 1 (a).

### (b) mélange du métallocène neutre et du solide catalytique

1197 mg de bis(cyclopentadiényl)dichlorozirconium ont été mélangés sous agitation pendant 48 heures dans 20 ml d'hexane avec 1396 mg du solide catalytique obtenu en (a). Le solide ainsi obtenu comprenait (% en poids) :
Ti : 8,6
Zr : 14,0
Cl : 26,9
Al : 1,0
Mg : 2,3.

### (c) polymérisation de l'éthylène

On a introduit dans un réacteur de trois litres, muni d'un agitateur, 1 ml d'une solution de 40 g/l de triéthylaluminium et 1 l d'isobutane. Ensuite, on a alimenté le réacteur en éthylène à une pression partielle de 0,8 MPa et en hydrogène à une pression partielle de 0,04 MPa. La température a été amenée à 60 °C. Puis, on y a ajouté 0,0041 g du solide obtenu en (b) et 0,0022 mmol de tétrakis(pentafluorophényl)borate de triphénylcarbénium sous forme de solution dans le toluène. La pression d'éthylène et la température ont été maintenues constantes pendant la durée de polymérisation. Après 90 minutes, le réacteur a été refroidi et dégazé. 37 g de polyéthylène ont été recueillis. Le polymère obtenu présentait les caractéristiques suivantes :
M_{w}/Mₙ = 41.

### Exemple 3 (conforme à l'invention) :

Dans cet exemple, on a mis en oeuvre un système catalytique supporté et la polymérisation a été effectuée en deux étapes consécutives.

### (a) préparation du solide catalytique :

On a utilisé le même solide catalytique que celui obtenu à l'exemple 1 (a).

### (b) préparation et activation du support :

On a calciné de la silice du type MS3040 de la société PQ à 600 °C pendant 16 heures sous air sec et on l'a ensuite mélangée à une quantité de dichlorure de magnésium telle que le mélange comprenne 9,8 % en poids de magnésium. Le mélange a été effectué dans un four rotatif pendant 16 heures à 400 °C sous azote.

### (c) mélange du métallocène neutre et du solide catalytique

On a mélangé 3,9 g du support obtenu en (b) avec 0,222 g du solide catalytique obtenu en (a) et 0,430 g d'une poudre de bis(cyclopentadiényl)-dichlorozirconium pendant 28 heures à 50 °C.

### (d) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 70 °C. Ensuite, on a alimenté le réacteur en éthylène à une pression partielle de 0,6 MPa. Puis, on y a ajouté 89,9 g du solide obtenu en (c). La pression d'éthylène et la température ont été maintenues constantes pendant la durée de polymérisation. Après 10 minutes, le réacteur a été refroidi et dégazé. Ensuite, on a réintroduit 1 l d'isobutane dans le réacteur. La température a été augmentée à 50 °C et on a réalimenté le réacteur en éthylène à une pression partielle de 1 MPa. Ensuite, on y a ajouté 0,0022 mmol de tétrakis(pentafluorophényl)borate de triphénylcarbénium. Après 30 minutes le réacteur a été dégazé et refroidi. Aucune trace de croûtage n'a été retrouvée dans le réacteur de polymérisation. 168 g de polyéthylène ont été recueillis. Le polymère obtenu présentait les caractéristiques suivantes :
PSA = 134.

### Exemple 4 (donné à titre de comparaison) :

Dans cet exemple non conforme à l'invention, on a fabriqué du polyéthylène au moyen d'un métallocène supporté selon le procédé décrit dans la demande de brevet EP-500944.

### (a) préparation et activation du support :

On a utilisé le même support que celui obtenu à l'exemple 3 (b).

### (b) mélange du métallocène neutre avec le support :

On a mélangé 3,8 g du support obtenu en (a) avec 0,354 g d'une poudre de bis(cyclopentadiényl)dichlorozirconium pendant 9 heures à 50 °C.

### (c) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 50 °C. Ensuite, on a alimenté le réacteur en éthylène à une pression partielle de 1 MPa. Puis, on y a ajouté 90 mg du solide obtenu en (b) et 0,0022 mmol de tétrakis(pentafluorophényl)borate de triphénylcarbénium. La pression d'éthylène et la température ont été maintenues constantes pendant la durée de polymérisation. Après 23 minutes, le réacteur a été refroidi et dégazé. On a constaté que la paroi du réacteur était couverte d'une fine couche de produit de croûtage. 113 g de polyéthylène ont été recueillis. Le polymère obtenu présentait les caractéristiques suivantes :
PSA = 42,6.

Une comparaison des résultats de l'exemple 4 avec ceux de l'exemple 3 font apparaître le progrès apporté par l'invention pour ce qui concerne le poids spécifique apparent du polymère et les phénomènes de croûtage dans le réacteur de polymérisation.

### Exemple 5 (donné à titre de comparaison) :

Dans cet exemple non conforme à l'invention, on a fabriqué du polyéthylène au moyen d'un métallocène supporté selon le procédé décrit dans la demande de brevet EP-500944.

### (a) préparation et activation du support :

On a calciné de la silice du type 948 de la société GRACE à 800°C pendant 16 heures sous balayage d'azote.

### (b) mélange du métallocène neutre avec le support :

On a traité 2 g du support obtenu en (a) avec une solution de 232 mg de bis(cyclopentadiényl)dichlorozirconium dans 20 ml de toluène. Ensuite, le toluène a été éliminé par distillation sous pression réduite. Le solide ainsi obtenu a été mis en suspension dans 48 ml d'hexane.

### (c) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 60 °C. Ensuite, on a alimenté le réacteur en éthylène à une pression partielle de 0,8 MPa. Puis, on y a ajouté une quantité de la suspension obtenue en (b) contenant 92 mg de solide et 0,0022 mmol de tétrakis(pentafluorophényl)borate de triphénylcarbénium. La pression d'éthylène et la température ont été maintenues constantes pendant la durée de polymérisation. Après 90 minutes, le réacteur a été refroidi et dégazé. On a constaté que la paroi du réacteur était couverte d'une fine couche de produit de croûtage. 56 g de polyéthylène ont été recueillis. Le polymère obtenu présentait la caractéristique suivante :
Mw/Mn = 7,9.

Une comparaison des résultats des exemples 1 et 2 avec ceux de l'exemple 5 font apparaître le progrès apporté par l'invention pour ce qui concerne la distribution des poids moléculaires du polymère obtenu.

## Revendications

1. Procédé de (co)polymérisation d'au moins une oléfine en présence d'un système catalytique comprenant au moins un dérivé d'aluminium de formule générale AlXₙT₃₋ₙ, dans laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition, selon lequel on prépare un mélange du métallocène neutre avec un solide catalytique contenant au moins un élément du groupe IVB du tableau périodique, du magnésium et un halogène, on met le mélange ainsi obtenu en contact avec au moins un diluant hydrocarboné, le dérivé d'aluminium et l'oléfine, et on y ajoute l'agent ionisant.

2. Procédé selon la revendication 1, **caractérisé en ce que** l'oléfine est l'éthylène et/ou le propylène.

3. Procédé selon la revendication 1 à 2, **caractérisé en ce que** le métallocène neutre répond à la formule (Cₚ)ₐ(Cₚ')_{b}MXₓZ_{z}, dans laquelle :
- Cₚ et Cp' désignent chacun un radical hydrocarboné insaturé coordiné à un atome central, les groupes Cₚ et Cₚ' pouvant être liés par un pont covalent
- M désigne le métal de transition qui est choisi parmi les groupes IIIB, IVB, VB et VIB du tableau périodique
- a, b, x et z désignent des nombres entiers tels que (a + b + x + z) = m, x ≥ 0, z ≥ 0 et a et/ou b ≠ 0
- m désigne la valence du métal de transition M
- X désigne un halogène,
- Z désigne un radical hydrocarboné pouvant éventuellement comprendre de l'oxygène ou un radical silyl de formule (-Rₜ₋Si-R'R''R''') où
- R désigne un groupe alkyle, alkényle, aryle, alkoxy ou cycloalkyle éventuellement substitué, comprenant jusqu'à 20 atomes de carbone,
- R', R" et R''' sont identiques ou différents et désignent chacun un halogène ou un groupe alkyle, alkényle, aryle, alkoxy ou cycloalkyle éventuellement substitué, comprenant jusqu'à 20 atomes de carbone, et
- t désigne 0 ou 1.

4. Procédé selon la revendication 3, **caractérisé en ce que** le métallocène neutre est préparé en faisant réagir un composé de formule (Cₚ)ₐ(Cₚ')_{b}MXₓH_{z} avec un silane.

5. Procédé selon la revendication 3, **caractérisé en ce** le métallocène neutre est préparé en faisant réagir un composé de formule (Cₚ)ₐ(Cₚ')_{b}MXₓH_{z} avec une oléfine.

6. Procédé selon la revendication 5, **caractérisé en ce que** l'oléfine est l'éthylène.

7. Procédé selon l'une quelconque des revendications 3 à 6, **caractérisé en ce que** le métal de transition est le zirconium.

8. Procédé selon l'une quelconque des revendications 1 à 7, **caractérisé en ce que** dans le solide catalytique la teneur en élément du groupe IVB est de 10 à 30 % en poids, la teneur en halogène est de 20 à 50 % en poids et la teneur en magnésium est de 0,5 à 20 % en poids.

9. Procédé selon l'une quelconque des revendications 1 à 8, **caractérisé en ce que** l'agent ionisant est choisi parmi le groupe contenant le tétrakis(pentafluorophényl)borate de triphénylcarbénium, tétrakis(pentafluorophényl)borate de N,N-diméthylanilinium, le tétrakis(pentafluorophényl)borate de tri(n-butyl)ammonium, le tri(pentafluorophényl)bore, le triphénylbore, le triméthylbore, le tri(triméthylsilyl)borate et les organoboroxines.

10. Procédé selon la revendication 9, **caractérisé en ce que** l'agent ionisant est sélectionné parmi le tétrakis(pentafluorophényl)borate de triphénylcarbénium et le tri(pentafluorophényl)bore.

11. Procédé selon la revendication 10, **caractérisé en ce que** le tri(pentafluorophényl)bore est mis en oeuvre en l'absence d'un acide de Brönsted.

12. Procédé selon l'une quelconque des revendications 1 à 11, **caractérisé en ce que** le dérivé d'aluminium est choisi parmi ceux dont le groupe T est un radical hydrocarboné choisi parmi les groupes alkyle, alkényle, aryle et alkoxy, éventuellement substitués, contenant jusqu'à 20 atomes de carbone.

13. Procédé selon la revendication 12, **caractérisé en ce que** le dérivé d'aluminium est choisi parmi le triéthylaluminium et le triisobutylaluminium.

14. Procédé selon l'un quelconque des revendications 1 à 13, **caractérisé en ce que** le diluant hydrocarboné est choisi parmi les hydrocarbures aliphatiques.

15. Procédé selon l'une quelconque des revendications 1 à 14, **caractérisé en ce que** le métallocène neutre et le solide catalytique sont mis en oeuvre en quantités telles que le rapport pondéral du métallocène neutre au solide catalytique soit au moins égal à 0,01 et au maximum égal à 20.

16. Procédé selon l'une quelconque des revendications 1 à 15, **caractérisé en ce que** le métallocène neutre et le solide catalytique sont mis en oeuvre en quantités telles que le rapport pondéral du métallocène neutre au solide catalytique soit de 1 à 20.

17. Procédé selon l'une quelconque des revendications 1 à 15, **caractérisé en ce que** le métallocène neutre et le solide catalytique sont mis en oeuvre en quantités telles que le rapport molaire du métallocène neutre au solide catalytique soit de 0,01 à 1.

18. Procédé selon l'une quelconque des revendications 1 à 17, **caractérisé en ce que** l'agent ionisant et le métallocène neutre sont mis en oeuvre en quantités telles que le rapport molaire de l'agent ionisant au métallocène neutre soit de 0,1 à 10.

19. Procédé selon l'une quelconque des revendications 1 à 18, **caractérisé en ce que** le dérivé d'aluminium et le métallocène neutre sont mis en oeuvre en quantités telles que le rapport molaire du dérivé d'aluminium au métallocène neutre soit au moins égal à 10.

20. Procédé selon l'une quelconque des revendications 1 à 19, **caractérisé en ce que** le rapport pondéral du métal de transition du métallocène à l'élément du groupe IVB du solide catalytique est de 0,05 à 10.

21. Procédé selon l'une quelconque des revendications 1 à 20, **caractérisé en ce que** le métallocène neutre ou l'agent ionisant est déposé sur un support minéral.

22. Procédé selon l'une quelconque des revendications 1 à 21, **caractérisé en ce que** le solide catalytique est mélangé à un support minéral, le métallocène neutre étant ensuite ajouté à ce mélange.

23. Procédé selon la revendication 21 ou 22, **caractérisé en ce que** le support minéral est de la silice, de l'alumine, du chlorure de magnésium ou un mélange de silice et de chlorure de magnésium.

24. Procédé selon l'une quelconque des revendications 1 à 23, **caractérisé en ce qu'**il est appliqué à la fabrication d'homopolymères de l'éthylène ou du propylène et de copolymères de l'éthylène et/ou du propylène.

## Claims

1. Process for the (co)polymerisation of at least one olefin in the presence of a catalytic system comprising at least one aluminium derivative with the general formula AlXₙT₃₋ₙ, in which X denotes a halogen, T denotes a hydrocarbon radical capable optionally of containing oxygen and n is a number from 0 to 3, at least one ionising agent and at least one neutral metallocene derived from a transition metal, according to which a mixture of the neutral metallocene with a catalytic solid containing at least one element of Group IVB of the Periodic Table, some magnesium and a halogen is prepared, the mixture thus obtained is placed in contact with at least one hydrocarbon diluent, the aluminium derivative and the olefin, and the ionising agent is added.

2. Process according to claim 1, **characterised in that** the olefin is ethylene and/or propylene.

3. Process according to claims 1 to 2, **characterised in that** the neutral metallocene corresponds to the formula (Cₚ)ₐ(Cₚ')_{b}MXₓZ_{z}, in which:
- Cₚ and Cp' each denote an unsaturated hydrocarbon radical co-ordinated with a central atom, the Cₚ and Cp' groups being able to be linked by a covalent bridge,
- M denotes the transition metal, which is chosen from Groups IIIB, IVB, VB and VIB of the Periodic Table,
- a, b, x and z denote whole numbers such that (a + b + x + z) = m, x ≥ 0, z ≥ 0 and a and/or b ≠ 0,
- m denotes the valency of the transition metal M,
- X denotes a halogen and
- Z denotes a hydrocarbon radical capable optionally of containing oxygen or a silyl radical with the formula (-Rₜ₋Si-R'R''R''') where
- R denotes an optionally substituted alkyl, alkenyl, aryl, alkoxy or cycloalkyl group containing up to 20 carbon atoms,
- R', R" and R''' are identical or different and each denote a halogen or an optionally substituted alkyl, alkenyl, aryl, alkoxy or cycloalkyl group containing up to 20 carbon, and
- t denotes 0 or 1.

4. Process according to claim 3, **characterised in that** the neutral metallocene is prepared by reacting a compound with the formula (Cₚ)ₐ(Cₚ')_{b}MXₓH_{z} with a silane.

5. Process according to claim 3, **characterised in that** the neutral metallocene is prepared by reacting a compound with the formula (Cₚ)ₐ(Cₚ')_{b}MXₓH_{z} with an olefin.

6. Process according to claim 5, **characterised in that** the olefin is ethylene.

7. Process according to any one of claims 3 to 6, **characterised in that** the transition metal is zirconium.

8. Process according to any one of claims 1 to 7, **characterised in that** in the catalytic solid the content of the Group IVB element is 10 to 30 wt %, the content of halogen is 20 to 50 wt % and the content of magnesium is 0.5 to 20 wt %.

9. Process according to any one of claims 1 to 8, **characterised in that** the ionising agent is chosen from the group containing triphenyl carbenium tetrakis(pentafluorophenyl)borate, N,N-dimethyl aluminium tetrakis(pentafluorophenyl)borate, tri(n-butyl)ammonium tetrakis (pentafluorophenyl)borate, tri(pentafluorophenyl)boron, triphenylboron, trimethylboron, tri(trimethylsilyl)borate and organoboroxines.

10. Process according to claim 9, **characterised in that** the ionising agent is selected from triphenyl carbenium tetrakis(pentafluorophenyl)borate and tri(pentafluorophenyl)boron.

11. Process according to claim 10, **characterised in that** the tri(pentafluorophenyl) boron is used in the absence of a Brönsted acid.

12. Process according to any one of claims 1 to 11, **characterised in that** the aluminium derivative is chosen from those whose T group is a hydrocarbon radical chosen from optionally substituted alkyl, alkenyl, aryl and alkoxy groups containing up to 20 carbon atoms.

13. Process according to claim 12, **characterised in that** the aluminium derivative is chosen from triethylaluminium and triisobutylaluminium.

14. Process according to any one of claims 1 to 13, **characterised in that** the hydrocarbon diluent is chosen from aliphatic hydrocarbons.

15. Process according to any one of claims 1 to 14, **characterised in that** the neutral metallocene and the catalytic solid are employed in quantities such that the ratio by weight of the neutral metallocene to the catalytic solid is at least equal to 0.01 and at most equal to 20.

16. Process according to any one of claims 1 to 15, **characterised in that** the neutral metallocene and the catalytic solid are employed in quantities such that the ratio by weight of the neutral metallocene to the catalytic solid is from 1 to 20.

17. Process according to any one of claims 1 to 15, **characterised in that** the neutral metallocene and the catalytic solid are employed in quantities such that the molar ratio of the neutral metallocene to the catalytic solid is from 0.01 to 1.

18. Process according to any one of claims 1 to 17, **characterised in that** the ionising agent and the neutral metallocene are employed in quantities such that the molar ratio of the ionising agent to the neutral metallocene is from 0.1 to 10.

19. Process according to any one of claims 1 to 18, **characterised in that** the aluminium derivative and the neutral metallocene are employed in quantities such that the molar ratio of the aluminium derivative to the neutral metallocene is at least equal to 10.

20. Process according to any one of claims 1 to 19, **characterised in that** the ratio by weight of the transition metal of the metallocene to the Group IVB element of the catalytic solid is from 0.05 to 10.

21. Process according to any one of claims 1 to 20, **characterised in that** the neutral metallocene or the ionising agent is deposited on a mineral support.

22. Process according to any one of claims 1 to 21, **characterised in that** the catalytic solid is mixed with a mineral support, the neutral metallocene being then added to said mixture.

23. Process according to claim 21 or 22, **characterised in that** the mineral support is silica, alumina, magnesium chloride or a mixture of silica and magnesium chloride.

24. Process according to any one of claims 1 to 23, **characterised in that** it is applied to the manufacture of homopolymers of ethylene or propylene and of copolymers of ethylene and/or propylene.

## Patentansprüche

1. Verfahren zur (Co)polymerisation von wenigstens einem Olefin in Gegenwart eines katalytischen Systems, umfassend wenigstens ein Aluminiumderivat der allgemeinen Formel AlXₙT₃₋ₙ, worin X ein Halogen bezeichnet, T einen Kohlenwasserstoffrest, der gegebenenfalls Sauerstoff umfassen kann, bezeichnet und n eine Zahl von 0 bis 3 ist, wenigstens ein Ionisierungsmittel und wenigstens ein neutrales Metallocen, das von einem Übergangsmetall abgeleitet ist, gemäß dem man ein Gemisch des neutralen Metallocens mit einem katalytischen Feststoff, der wenigstens ein Element der Gruppe IVB des Periodensystems, Magnesium und ein Halogen enthält, herstellt, man das so erhaltene Gemisch mit wenigstens einem Kohlenwasserstoffverdünnungsmittel, dem Aluminiumderivat und dem Olefin in Kontakt bringt und man dazu das Ionisierungsmittel hinzufügt.

2. Verfahren gemäß Anspruch 1, **dadurch gekennzeichnet, dass** das Olefin Ethylen und/oder Propylen ist.

3. Verfahren gemäß Anspruch 1 bis 2, **dadurch gekennzeichnet, dass** das neutrale Metallocen der Formel (Cₚ)ₐ(Cₚ')_{b}MXₓZ_{z} entspricht, worin:
- Cₚ und Cₚ' jeweils einen ungesättigten Kohlenwasserstoffrest, der an ein Zentralatom koordiniert ist, bezeichnen, wobei die Gruppen Cₚ und Cₚ' über eine kovalente Brücke verbunden sein können,
- M das Übergangsmetall bezeichnet, das unter den Gruppen IIIB, IVB, VB und VIB des Periodensystems ausgewählt ist,
- a, b, x und z ganze Zahlen bedeuten, so dass (a + b + x + z) = m, x ≥ 0, z ≥ 0 und a und/oder b ≠ 0,
- m die Wertigkeit des Übergangsmetalls M bezeichnet,
- X ein Halogen bezeichnet,
- Z einen Kohlenwasserstoffrest, der gegebenenfalls Sauerstoff umfassen kann, oder einen Silylrest der Formel (-Rₜ-Si-R'R''R''') bezeichnet, worin
- R eine gegebenenfalls substituierte Alkyl-, Alkenyl-, Aryl-, Alkoxy- oder Cycloalkylgruppe mit bis zu 20 Kohlenstoffatomen bezeichnet,
- R', R" und R''' gleich oder verschieden sind und jeweils ein Halogen oder eine gegebenenfalls substituierte Alkyl-, Alkenyl-, Aryl-, Alkoxy- oder Cycloalkylgruppe mit bis zu 20 Kohlenstoffatomen bezeichnen,
- t 0 oder 1 bedeutet.

4. Verfahren gemäß Anspruch 3, **dadurch gekennzeichnet, dass** das neutrale Metallocen hergestellt wird, indem man eine Verbindung der Formel (Cₚ)ₐ(Cₚ')_{b}MXₓH_{z} mit einem Silan umsetzt.

5. Verfahren gemäß Anspruch 3, **dadurch gekennzeichnet, dass** das neutrale Metallocen hergestellt wird, indem man eine Verbindung der Formel (Cₚ)ₐ(Cₚ')_{b}MXₓH_{z} mit einem Olefin umsetzt.

6. Verfahren gemäß Anspruch 5, **dadurch gekennzeichnet, dass** das Olefin Ethylen ist.

7. Verfahren gemäß einem der Ansprüche 3 bis 6, **dadurch gekennzeichnet, dass** das Übergangsmetall Zirkonium ist.

8. Verfahren gemäß einem der Ansprüche 1 bis 7, **dadurch gekennzeichnet, dass** in dem katalytischen Feststoff der Gehalt an Element der Gruppe IVB 10 bis 30 Gew.-% beträgt, der Gehalt an Halogen 20 bis 50 Gew.-% beträgt und der Gehalt an Magnesium 0,5 bis 20 Gew.-% beträgt.

9. Verfahren gemäß einem der Ansprüche 1 bis 8, **dadurch gekennzeichnet, dass** das Ionisierungsmittel aus der Gruppe ausgewählt ist, die Triphenylcarbeniumtetrakis(pentafluorphenyl)borat, N,N-Dimethylanilinium-tetrakis(pentafluorphenyl)borat, Tri(n-butyl)ammonium-tetrakis(pentafluorphenyl)borat, Tri(pentafluorphenyl)bor, Triphenylbor, Trimethylbor, Tri(trimethylsilyl)borat und die Organoboroxine enthält.

10. Verfahren gemäß Anspruch 9, **dadurch gekennzeichnet, dass** das lonisierungsmittel unter Triphenylcarbenium-tetrakis(pentafluorphenyl)borat und Tri(pentafluorphenyl)bor ausgewählt ist.

11. Verfahren gemäß Anspruch 10, **dadurch gekennzeichnet, dass** das Tri(pentafluorphenyl)bor in Abwesenheit einer Brönstedsäure eingesetzt wird.

12. Verfahren gemäß einem der Ansprüche 1 bis 11, **dadurch gekennzeichnet, dass** das Aluminiumderivat unter denjenigen ausgewählt ist, bei denen die Gruppe T ein Kohlenwasserstoffrest ist, der ausgewählt ist unter den gegebenenfalls substituierten Alkyl-, Alkenyl-, Aryl- und Alkoxygruppen mit bis zu 20 Kohlenstoffatomen.

13. Verfahren gemäß Anspruch 12, **dadurch gekennzeichnet, dass** das Aluminiumderivat unter Triethylaluminium und Triisobutylaluminium ausgewählt ist.

14. Verfahren gemäß einem der Ansprüche 1 bis 13, **dadurch gekennzeichnet, dass** das Kohlenwasserstoffverdünnungsmittel unter den aliphatischen Kohlenwasserstoffen ausgewählt ist.

15. Verfahren gemäß einem der Ansprüche 1 bis 14, **dadurch gekennzeichnet, dass** das neutrale Metallocen und der katalytische Feststoff in solchen Mengen eingesetzt werden, dass das Gewichtsverhältnis des neutralen Metallocens zu dem katalytischen Feststoff wenigstens gleich 0,01 und höchstens gleich 20 ist.

16. Verfahren gemäß einem der Ansprüche 1 bis 15, **dadurch gekennzeichnet, dass** das neutrale Metallocen und der katalytische Feststoff in solchen Mengen eingesetzt werden, dass das Gewichtsverhältnis des neutralen Metallocens zu dem katalytischen Feststoff 1 bis 20 beträgt.

17. Verfahren gemäß einem der Ansprüche 1 bis 15, **dadurch gekennzeichnet, dass** das neutrale Metallocen und der katalytische Feststoff in solchen Mengen eingesetzt werden, dass das Molverhältnis des neutralen Metallocens zu dem katalytischen Feststoff 0,01 bis 1 beträgt.

18. Verfahren gemäß einem der Ansprüche 1 bis 17, **dadurch gekennzeichnet, dass** das Ionisierungsmittel und das neutrale Metallocen in solchen Mengen eingesetzt werden, dass das Molverhältnis des Ionisierungsmittels zu dem neutralen Metallocen 0,1 bis 10 beträgt.

19. Verfahren gemäß einem der Ansprüche 1 bis 18, **dadurch gekennzeichnet, dass** das Aluminiumderivat und das neutrale Metallocen in solchen Mengen eingesetzt werden, dass das Molverhältnis des Aluminiumderivats zu dem neutralen Metallocen wenigstens gleich 10 ist.

20. Verfahren gemäß einem der Ansprüche 1 bis 19, **dadurch gekennzeichnet, dass** das Gewichtsverhältnis des Übergangsmetalls des Metallocens zu dem Element der Gruppe IVB des katalytischen Feststoffs 0,05 bis 10 beträgt.

21. Verfahren gemäß einem der Ansprüche 1 bis 20, **dadurch gekennzeichnet, dass** das neutrale Metallocen oder das Ionisierungsmittel auf einem mineralischen Träger abgeschieden ist.

22. Verfahren gemäß einem der Ansprüche 1 bis 21, **dadurch gekennzeichnet, dass** der katalytische Feststoff mit einem mineralischen Träger gemischt wird, wobei das neutrale Metallocen anschließend zu diesem Gemisch hinzugefügt wird.

23. Verfahren gemäß Anspruch 21 oder 22, **dadurch gekennzeichnet, dass** der mineralische Träger Siliciumdioxid, Aluminiumoxid, Magnesiumchlorid oder ein Gemisch von Siliciumdioxid und Magnesiumchlorid ist.

24. Verfahren gemäß einem der Ansprüche 1 bis 23, **dadurch gekennzeichnet, dass** es auf die Herstellung von Homopolymeren des Ethylens oder des Propylens und von Copolymeren des Ethylens und/oder des Propylens angewandt wird.
